(19) **Europäisches Patentamt / European Patent Office / Office européen des brevets**

(11) **EP 4 625 534 A1**

(12) **EUROPEAN PATENT APPLICATION**
published in accordance with Art. 153(4) EPC

(43) Date of publication:
**01.10.2025 Bulletin 2025/40**

(21) Application number: **24849501.2**

(22) Date of filing: **26.07.2024**

(51) International Patent Classification (IPC):
*H01M 4/36* (2006.01)   *H01M 4/48* (2010.01)
*H01M 4/134* (2010.01)   *H01M 10/052* (2010.01)
*H01M 4/02* (2006.01)

(52) Cooperative Patent Classification (CPC):
**H01M 4/02; H01M 4/134; H01M 4/36; H01M 4/48;
H01M 10/052; Y02E 60/10**

(86) International application number:
**PCT/KR2024/010913**

(87) International publication number:
**WO 2025/028932 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023  KR 20230098692
25.07.2024  KR 20240098727**

(71) Applicant: **LG Energy Solution, Ltd.
Seoul 07335 (KR)**

(72) Inventors:
• **PARK, Heeyeon**
  **Daejeon 34122 (KR)**
• **LEE, Seunggwan**
  **Daejeon 34122 (KR)**
• **HEO, Bumgi**
  **Daejeon 34122 (KR)**
• **SHIN, Sun Young**
  **Daejeon 34122 (KR)**
• **LEE, Yong Ju**
  **Daejeon 34122 (KR)**

(74) Representative: **Hoffmann Eitle
Patent- und Rechtsanwälte PartmbB
Arabellastraße 30
81925 München (DE)**

(54) **ANODE ACTIVE MATERIAL, ANODE AND LITHIUM SECONDARY BATTERY**

(57)    The present invention relates to an anode active material, an anode comprising same, and a lithium secondary battery, the anode active material comprising; a core including a silicon carbon composite; an oxide layer which is provided on at least a portion of the core and includes silicon oxide, and of which at least 50% has a thickness of greater than 5 nm; and a carbon layer provided on at least a portion of the oxide layer.

**EP 4 625 534 A1**

**Description**

[Technical Field]

This application claims priority to and the benefit of Korean Patent Application No. 10-2023-0098692 filed in the Korean Intellectual Property Office on July 28, 2023 and Korean Patent Application No. 10-2024-0098727 filed in the Korean Intellectual Property Office on July 25, 2024, the entire contents of which are incorporated herein by reference.
The present application relates to a negative electrode active material, a negative electrode, and a lithium secondary battery.

[Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.
In general, a lithium secondary battery includes a positive electrode, a negative electrode, a separator interposed between the positive electrode and the negative electrode, an electrolyte, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.
Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.
Accordingly, there is a need to develop a negative electrode active material that can improve performance of lithium secondary batteries.

SUMMARY OF THE INVENTION

[Technical Problem]

The present invention relates to a negative electrode active material that can improve life characteristics of lithium secondary batteries, a negative electrode including the negative electrode active material, and a secondary battery including the negative electrode.

[Technical Solution]

An exemplary embodiment of the present invention provides a negative electrode active material including: a core including a silicon carbon composite; an oxide layer provided on at least a portion of the core and including silicon oxide, a thickness of 50% or more of the oxide layer being greater than 5 nm; and a carbon layer provided on at least a portion of the oxide layer.
According to an exemplary embodiment of the present invention, an element ratio of Si:C on a surface of the negative electrode active material of the above-described embodiment is 1:1 to 1:4.
According to an exemplary embodiment of the present invention, an element ratio of Si:C in an entire of the negative electrode active material of the above-described embodiment is 0.9:1.1 to 1.1:0.9.
According to an exemplary embodiment of the present invention, the silicon oxide in the oxide layer of the above-described embodiment is $SiO_x$ (x is 0.1 or greater and less than 2).
According to an exemplary embodiment of the present invention, the negative electrode active material of the above-described embodiment includes silicon crystal grains with a particle diameter of 8 $\mu$m or less.
An exemplary embodiment of the present invention provides a negative electrode including the negative electrode active material according to the above-described exemplary embodiment, a conductive material, and a binder.
An exemplary embodiment of the present invention provides a lithium secondary battery including the negative electrode according to the above-described exemplary embodiment, a positive electrode, and a separator.
An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

[Advantageous Effects]

According to the exemplary embodiments of the present invention, by using a silicon carbon composite as a core material of a negative electrode active material, it is possible to achieve high capacity and efficiency while also improving the life characteristics of the battery and preventing problems such as gas generation due to the presence of an oxide layer and a carbon layer. Specifically, the oxide layer and carbon layer can prevent the deterioration in life characteristics due to the high reactivity of silicon even when the silicon crystal grains are small, and can also prevent the problem of gas generation resulting from contact of silicon with water during an aqueous process.

[Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms **"a",** "an" and "the" are intended to include the plural forms as well, unless the context clearly indicates otherwise.

In the present specification, the "average particle diameter (D50)" may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron region to several millimeters can be measured, and results with high reproducibility and high resolvability can be obtained.

The measurement of the average particle diameter (D50) may be confirmed using water and Triton-X100 dispersant with a Microtrac apparatus (manufacturer: Microtrac model name: S3500). Specifically, the average particle diameter (D50) of a positive electrode active material can be measured within a range of a refractive index of 1.5 to 1.7, and the average particle diameter (D50) of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a volume cumulative particle size distribution graph is obtained, and then the average particle diameter may be measured by obtaining the particle size corresponding to 50% of the volume cumulative amount.

In an exemplary embodiment of the present application, the crystal grain size may be calculated as a value of full width at half maximum (FWHM) through XRD analysis. Specifically, the crystal grain size may be measured using the FWHM obtained through XRD analysis and the Debey-Scherrer equation shown in Formula 1-1 below.

[Formula 1-1]

$$FWHM = (K\lambda)/(L\cos\theta)$$

in Formula 1-1,

L is the crystal grain size, K is a constant, $\theta$ is a Bragg angle, and $\lambda$ means a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put (laid across) on the line are excluded. When the number of lines is P and the magnification is V, the average particle diameter can be calculated by Formula 1-2 below.

[Formula 1-2]

$$Dm = (L*P*10^3)/(zV) \quad (\mu m)$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Formula 1-3 below.

[Formula 1-3]

$$Fm = (Fk * 10^6) / ((0.67n + z) V^2) \quad (\mu m^2)$$

In Formula 1-3, Fm is an average particle area, Fk is a measurement area on the photograph, z is the number of particles in a circle, n is the number of particles laid across the circle, and V is a magnification of a microscope.

Hereinafter, preferred embodiments of the present invention will be described in detail. However, it should be understood that the exemplary embodiments of the present invention may be modified in various forms and the scope of the present invention is not limited to the exemplary embodiments described below.

<Negative Electrode Active Material>

An exemplary embodiment of the present invention provides a negative electrode active material including: a core including a silicon carbon composite; an oxide layer provided on at least a portion of the core and including silicon oxide, a thickness of 50% or more of the oxide layer being greater than 5 nm; and a carbon layer provided on at least a portion of the oxide layer. Here, 50% or more of the oxide layer refers to 50% or more of an area covered by the oxide layer.

According to an exemplary embodiment, the silicon carbon composite included in the core may be a Si/C-based active material.

In the present specification, the silicon carbon composite is a composite of Si and C, and is distinguished from silicon carbide expressed as SiC. The silicon carbide does not react electrochemically with lithium, so all performance, including life, may be measured as 0.

The silicon carbon composite may be a composite of silicon, graphite, etc., and may form a structure in which a core composite of silicon, graphite, etc. is surrounded by graphene, amorphous carbon or the like. In the silicon carbon composite, silicon may be silicon nanoparticles.

According to an exemplary embodiment, the silicon carbon composite includes porous carbon-based particles and silicon particles located on surfaces or in internal pores of the porous carbon-based particles.

According to an exemplary embodiment, the silicon carbon composite may have a specific surface area of 0.5 to 10 m$^2$/g as measured by a BET method, a pore volume of 0.005 to 0.03 cm$^3$/g, and a pore size of 10 to 20 nm as measured by the BET method. The silicon carbon composite may have a pore volume of 0.005 to 0.03 cm$^3$/g as measured by a mercury penetration method (Hg porosimeter).

According to an exemplary embodiment, the silicon carbon composite may have a D90 particle diameter of 15 $\mu$m to 25 $\mu$m, a D50 particle diameter of 2 $\mu$m to 10 $\mu$m, and a D10 particle diameter of 0.1 $\mu$m to 1 $\mu$m.

The silicon particles formed on the surface and in the internal pores of the carbon-based particles may be silicon nanoparticles and may be crystalline, semicrystalline, amorphous, or a combination thereof.

According to an exemplary embodiment of the present invention, an oxide layer including silicon oxide is provided on at least a portion of the core, and a thickness of 50% or more of the oxide layer is greater than 5 nm, 7 nm or greater, 8 nm or greater, 9 nm or greater, or 10 nm or greater.

According to an exemplary embodiment of the present invention, an oxide layer including silicon oxide is provided on at least a portion of the core, and a thickness of 50% or more of the oxide layer is 10 nm or greater.

According to an exemplary embodiment of the present invention, an oxide layer including silicon oxide is provided on at least a portion of the core, and a thickness of 50% or more of the oxide layer is 100 nm or less, 80 nm or less, 50 nm or less, 40 nm or less, or 30 nm or less.

When the thickness of 50% or more, preferably 70% or more, and more preferably 90% or more of the oxide layer is greater than 5 nm, the exposure of silicon can be blocked or the reactivity of silicon can be reduced, thereby preventing deterioration in life characteristics and a problem of gas generation resulting from contact of silicon with water during an aqueous process. If the thickness of 50% or more of the oxide layer including silicon oxide is less than or equal to 5 nm, there is a concern that internal silicon particles may be exposed to the outside, which may deteriorate the aqueous processability. In this case, the electrode condition is not good, which may deteriorate the charge/discharge capacity, initial efficiency, and/or life characteristics of the secondary battery.

According to an exemplary embodiment, the oxide layer includes a silicon oxide.

By the oxide layer including a silicon oxide, contact between water and silicon is prevented during the manufacture of an aqueous slurry, thereby improving the electrode condition and the charge/discharge capacity, initial efficiency, and/or life characteristics of the secondary battery.

In particular, when the oxide layer includes silicon oxide and the thickness of 50% or more of the oxide layer exceeds 5 nm, there is a high probability that most of the silicon is passivated by the oxide layer, thereby improving the aqueous processability and thus the charge/discharge capacity, initial efficiency, and/or life characteristics of the secondary battery.

According to an exemplary embodiment, the silicon oxide includes $SiO_x$ ($0<x\leq2$). The $SiO_x$ ($0<x\leq2$) may be in a form of including various oxidation states, such as $Si$ and $SiO_2$. That is, x corresponds to a ratio of numbers of O to Si included in the $SiO_x$ ($0<x\leq2$). In other words, the $SiO_x$ ($0<x\leq2$) is not in a single state but in a state in which various states are mixed, and an average value of x may be obtained through XPS while etching by analyzing the content of oxygen (O).

In an example, the silicon oxide is $SiO_x$ ($0.1\leq x<2$). The x may be 1 or greater and less than 2, for example, 1.5 or greater and less than 2.

According to an exemplary embodiment, the silicon oxide is in an amorphous state. The $SiO_x$ ($0<x\leq2$) may be present in a form of an island type or thin film type layer, but may be present in various forms without being limited thereto.

In an exemplary embodiment, the thickness of the oxide layer may be 200 nm or less, for example 100 nm or less, 50 nm or less, 30 nm or less, or 20 nm or less. If the thickness of the oxide layer is too thin, it may be difficult to expect the effect of blocking contact with water, and if the thickness is too thick, the resistance may increase and the discharge capacity may not be expressed. An amount of the oxide layer may be 1 to 5 parts by weight based on 100 parts by weight of the negative electrode active material. This content range is advantageous in providing the effect of blocking contact with water by the oxide layer while offering an appropriate discharge capacity.

The negative electrode active material according to an exemplary embodiment includes a carbon layer provided on at least a portion of the oxide layer.

Specifically, the carbon layer, together with the oxide layer, blocks the exposure of silicon or lowers the reactivity of silicon, making it possible to prevent the deterioration in life characteristics or the gas generation due to contact with water during an aqueous process. In addition, the carbon layer imparts conductivity to the negative electrode active material, which can improve the initial efficiency, life characteristics, and battery capacity characteristics of a secondary battery.

In an exemplary embodiment, the carbon layer may include at least one of amorphous carbon and crystalline carbon.

In an exemplary embodiment, the carbon layer may be an amorphous carbon layer. The amorphous carbon may appropriately maintain the strength of the carbon layer to suppress expansion of the silicon carbon composite.

Further, the carbon layer may or may not further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon carbon composite. The amorphous carbon may be a carbide of at least one substance selected from the group consisting of tar, pitch, and other organic materials, or may be a carbon-based material formed by using a hydrocarbon as a source of chemical vapor deposition.

The carbide of the other organic materials may be an organic carbide selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 0.1 part by weight to 50 parts by weight, 0.1 part by weight to 30 parts by weight, or 0.1 part by weight to 20 parts by weight on the basis of 100 parts by weight of the total of the negative electrode active material. More specifically, the carbon layer may be included in an amount of 0.5 part by weight to 15 parts by weight or 1 part by weight to 10 parts by weight. When the aforementioned range is satisfied, the reduction in capacity and efficiency of the negative electrode active material can be prevented while improving the conductivity.

In an exemplary embodiment, a thickness of the carbon layer may be 1 nm to 500 nm, specifically 5 nm to 300 nm, and more specifically 5 nm to 100 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

Since the carbon layer is formed after the formation of the aforementioned oxide layer, the carbon layer can be provided on the oxide layer including silicon oxide, and can also be provided on a surface of the aforementioned core on which the oxide layer is not provided. In addition, since the carbon layer may completely cover the oxide layer, or may be formed only on a portion of the oxide layer, both the oxide layer and the carbon layer may be observed on the surface of the negative electrode active material.

According to an exemplary embodiment of the present invention, the negative electrode active material may include silicon crystal grains with a particle diameter of 8 $\mu$m or less. The silicon crystal grains may be included in the core including the silicon carbon composite. In an exemplary embodiment of the present invention, by including silicon crystal grains with a particle diameter of 8 $\mu$m or less, it is not only advantageous for improving lifespan performance, but the aforementioned oxide layer and carbon layer can also prevent gas generation during the aqueous process. According to one example, the negative electrode active material may include silicon crystal grains with a particle size of 8 $\mu$m or less, for example, 5 $\mu$m or less, 1,000 nm or less, or within a range of several tens of nanometers.

According to an exemplary embodiment of the present invention, the element ratio of Si:C on the surface of the negative electrode active material of the above-described exemplary embodiment is 1:1 to 1:4, for example, 1:2 to 1:4, or 1:3 to 1:4. Since the negative electrode active material layer has the carbon layer on its surface, the aforementioned element ratio means that the carbon ratio is higher on the surface. Having such an element ratio means that the surface of the negative electrode active material is well coated with carbon, which can be measured via XPS. Controlling the element ratio can be achieved by adjusting an amount of carbonizing material or changing a heat treatment time during a carbon layer introduction process.

According to an exemplary embodiment of the present invention, the element ratio of Si:C in an entire of the negative electrode active material of the above-described exemplary embodiment is 0.9:1.1 to 1.1:0.9, and may be, for example, 1:0.95 to 1:1.1. If the Si content increases, it is advantageous for increasing capacity, but can lead to problems where particles grow significantly due to deposition on the surface rather than in the carbon pores, which may have a negative impact on life, processability, and the like. The element ratio range of Si:C is advantageous for satisfying capacity, life, and processability. The negative electrode active material according to the exemplary embodiment is primarily composed of three elements, Si, C, and O. Excluding the influence of the other elements, a C content is measured using a CS analyzer, and an O content is measured using an ONH analyzer. Then, a value obtained by subtracting the measured values from the total can be calculated as a Si content.

According to an exemplary embodiment, an average particle diameter (D50) of the negative electrode active material may be 0.1 $\mu$m to 30 $\mu$m, specifically 1 $\mu$m to 20 $\mu$m, and more specifically 1 $\mu$m to 10 $\mu$m, or 2 $\mu$m to 10 $\mu$m. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

According to an exemplary embodiment, a BET specific surface area of the negative electrode active material is 20 $m^2$/g or less, and is preferably, for example 10 $m^2$/g or less. For example, the BET specific surface area of the negative electrode active material may be 0.11 $m^2$/g or greater and 10 $m^2$/g or less, for example 4 $m^2$/g to 6 $m^2$/g. The specific surface area may be measured by the Brunauer-Emmett-Teller (BET) method. For example, the specific surface area may be measured with a BET six-point method by means of a nitrogen gas adsorption method using a porosimetry analyzer (Bell Japan Inc., Belsorp-II mini).

<Method for Manufacturing Negative Electrode Active Material>

The present invention provides a method for manufacturing a negative electrode active material, and more specifically, a method for manufacturing a negative electrode active material according to the above-described exemplary embodiment.

An exemplary embodiment of the present invention provides a method for manufacturing a negative electrode active material of the present invention, the method including the steps of: forming a core including a silicon carbon composite; forming an oxide layer provided on at least a portion of the core and including silicon oxide; and forming a carbon layer on at least a portion of the oxide layer.

According to an exemplary embodiment, the step of forming a core including the silicon carbon composite may include the steps of etching carbon-based particles including internal pores to expand the internal pores of the carbon-based particles; and forming silicon particles on a surface and in the internal pores of the carbon-based particles with expanded internal pores.

The step of expanding the internal pores of the carbon-based particles may be performed in a nitrogen ($N_2$) atmosphere, an oxygen ($O_2$) atmosphere, or an air atmosphere. Specifically, a flow rate of the oxygen ($O_2$) or an air containing the oxygen may be controlled to 0.1 L/min to 10 L/min.

The step of expanding the internal pores of the carbon-based particles may be performed at a temperature range of from 400°C to 1200°C for 30 minutes to 4 hours.

Pore characteristics of the obtained porous carbon-based particles may vary depending on conditions for expanding the internal pores of the carbon-based particles.

An etchant may be used to expand the internal pores of the carbon-based particles, and for example, an alkaline material such as KOH may be used. For example, the carbon-based particles and KOH may be mixed in a weight ratio of 1:1 to 1:5 to expand the internal pores of the carbon-based particles.

The step of forming the silicon particles may be performed using a chemical vapor deposition (CVD) method. In this case, silicon nanoparticles are deposited on the surface and/or in the internal pores of the carbon-based particles with expanded internal pores, so that a silicon coating layer in the form of a film, an island, or a combination thereof may be formed.

The step of forming the silicon particles may include forming the silicon carbon composite by causing $SiH_4/H_2$ gas to flow to the carbon-based particles at 500°C to 900°C using a chemical vapor deposition (CVD) apparatus.

The step of forming an oxide layer provided on at least a portion of the core and including silicon oxide may include forming the oxide layer by partially or completely oxidizing a surface of the core including the above-described silicon carbon composite.

According to an exemplary embodiment of the present invention, the step of forming an oxide layer provided on at least a portion of the core and including silicon oxide may include a heat treatment step performed in an atmosphere including oxygen.

Specifically, the heat treatment step may be performed at 500°C to 700°C, for example, 600°C to 700°C to form the oxide layer.

If the heat treatment step is performed at a temperature exceeding 700°C, it leads to growth of silicon carbon composite (SiC), which is undesirable because it instead results in reductions in the capacity and efficiency of the material.

The atmosphere including oxygen may include more than 0 vol% and 10 vol% or less of oxygen, for example, 3 vol% to 7 vol%. The atmosphere including oxygen may include an inert gas such as argon in addition to oxygen. The heat treatment time is not particularly limited, but may be, for example, 1 hour to 12 hours, 1 hour to 8 hours, or 2 hours to 5 hours.

A thickness of the oxide layer may be controlled by heat treatment temperature, time, and the like.

The step of forming a carbon layer on at least a portion of the oxide layer may be performed by using a chemical vapor deposition (CVD) method in which a carbon-based material, for example hydrocarbon gas is used, or may be performed by carbonizing a material serving as a carbon source.

Specifically, after placing the silicon carbon composite with the oxide layer including silicon oxide into a reactor, a hydrocarbon gas may be chemically vapor-deposited (CVD) at a temperature of 600°C to 700°C to form the carbon layer. The hydrocarbon gas may be at least one hydrocarbon gas selected from the group consisting of methane, ethane, propane, and acetylene, and may be heat-treated at 600°C to 700°C.

<Negative Electrode>

An exemplary embodiment of the present invention provides a negative electrode including the negative electrode active material according to the above-described exemplary embodiment, a conductive material, and a binder.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder, and/or a conductive material to at least one surface of a negative electrode current collector, and drying and roll-pressing the same.

The negative electrode slurry includes the negative electrode active material, the binder, and/or the conductive material.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as $SiO_\beta(0<\beta<2)$, $SnO_2$, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, and specifically 10:90 to 50:50.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powder; a conductive whisker such as zinc oxide and potassium titanate; a conductive metal oxide such as titanium oxide; a conductive material such as polyphenylene derivative, and the like may be used.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

<Secondary Battery>

An exemplary embodiment of the present invention provides a lithium secondary battery including the negative electrode according to the above-described exemplary embodiment, a positive electrode, and a separator.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a

surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The lithium secondary battery may further include an electrolyte. Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3$ $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, **N**-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

Other exemplary embodiments of the present invention provide a battery module including the secondary battery as a unit cell, and a battery pack including the battery module or a battery pack including the secondary battery. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

### Example 1

A 0.5M sucrose aqueous solution was put into an autoclave and subjected to a reaction at 180°C for 24 hours to synthesize spherical particles. The carbon-based particles obtained after the reaction were washed with ethanol 2 to 3 times. The carbon-based particles dried at 100°C for 12 hours or longer were mixed with KOH in a ratio of 1:3 by parts by weight, and the mixture was heated at 800°C for 2 hours in a nitrogen atmosphere to expand pores. Thereafter, the carbon-based particles were washed with distilled water and dried at 100°C for 12 hours or longer. The carbon-based particles with expanded pores were then placed in the hot zone of the CVD apparatus. Subsequently, a gas mixture of $SiH_4/H_2$ (= 5/95) was flowed at a flow rate of 50 ml/min at 600°C for 2 hours to prepare a silicon/carbon composite. Then, the heat treatment was performed at 700°C for 3 hours in an atmosphere of $O_2/Ar$ (= 5/95) to form an oxide layer. The silicon/carbon composite was placed in the hot zone of the CVD apparatus and subjected to a reaction for 1 hour by introducing methane into the hot zone at 700°C using Ar as the carrier gas to form a carbon layer on the surface of the silicon/carbon composite, resulting in preparation of a negative electrode active material including an oxide layer and a carbon layer on the surface of the silicon/carbon composite.

### Example 2

A negative electrode active material was prepared in the same manner as in Example 1, except that the ratio of carbon-based particles and KOH was changed to 1:5 and the heat treatment temperature was changed to 900°C.

### Example 3

A negative electrode active material was prepared in the same manner as in Example 1, except that the oxide layer formation conditions were changed to the atmosphere of $O_2/Ar$ (= 10/90), 800°C, and 3 hours.

### Example 4

A negative electrode active material was prepared in the same manner as in Example 1, except that the heat treatment time for forming a carbon layer was increased to 3 hours.

**Example 5**

A negative electrode active material was prepared in the same manner as in Example 1, except that $SiH_4/H_2$ (= 5/95) gas was flowed at a flow rate of 50 ml/min at 600°C for 1 hour.

**Comparative Example 1**

A negative electrode active material was prepared in the same manner as in Example 1, except that the step of forming an oxide layer was excluded.

**Comparative Example 2**

A negative electrode active material was prepared in the same manner as in Example 1, except that the step of forming a carbon layer was excluded.

**Comparative Example 3**

A negative electrode active material was prepared in the same manner as in Example 1, except that the step of forming an oxide layer was performed after the step of forming a carbon layer.

**Comparative Example 4**

A negative electrode active material was prepared in the same manner as in Example 1, except that a coating layer of $Al_2O_3$ with a thickness of about 1 nm was formed as an oxide layer.

The particle diameter (D50) of the negative electrode active materials and the particle diameters of the silicon crystal grains were analyzed by laser diffraction particle size analysis using a Microtrac S3500 apparatus.

The specific surface area of the negative electrode active material was measured with a BET six-point method by means of a nitrogen gas adsorption method using a porosimetry analyzer (Bell Japan Inc., Belsorp-II mini).

The thickness of the oxide layer and the surface Si:C ratio were measured by XPS analysis. The XPS device used was Nexsa 2 from Thermo Fisher Scientific Inc. Since the XPS device only analyzes samples within the region of the x-ray spot size (400 $\mu$m), about 2 to 3 points were measured while etching the sample surface during the analysis. In this case, when the element ratio varies depending on the location, the measurement results were represented as a range with the measured maximum and minimum values, corresponding to the upper and lower limits respectively, based on the deviations at different locations.

The overall Si:C ratio in the negative electrode active material and the composition of the oxide layer were determined by measuring the C content using a CS analyzer and the O content using an ONH analyzer, and then calculating, as the Si content, a value obtained by subtracting the measured values from the total.

[Table 1]

| | Thickness of oxide layer (nm) | particle diameter (D50) (μm) | BET specific surface area (m²/g) | Particle diameter of silicon crystal grains (nm) | Surface Si:C ratio | Overall Si:C ratio | Oxide layer composition (x value of $SiO_x$) |
|---|---|---|---|---|---|---|---|
| Example 1 | 10 to 20 | 7.8 | 5.8 | 1.5 | 1:3 to 1:3.5 | 1:1.02 | 1.8 |
| Example 2 | 10 to 20 | 7.6 | 4.7 | 1.3 | 1:3 to 1:3.5 | 1:1.07 | 1.75 |
| Example 3 | 20 to 30 | 8.0 | 5.0 | 5.2 | 1:3 to 1:3.5 | 1:0.98 | 1.85 |
| Example 4 | 10 to 20 | 7.9 | 4.8 | 1.7 | 1:3.5 to 1:4 | 1:1.09 | 1.8 |
| Example 5 | 10 to 20 | 7.8 | 5.8 | 1.5 | 1:3.5 to 1:4 | 1: 1.28 | 1.8 |
| Comparative Example 1 | 0 to 5 | 7.6 | 5.5 | 1.5 | 1:3 to 1:3.5 | 1:1.01 | 0.1 |
| Comparative Example 2 | 10 to 20 | 7.7 | 23 | 1.6 | 1:0.8 to 1:1.2 | 1:0.93 | 1.8 |
| Comparative Example 3 | 5 to 10 | 7.8 | 5.9 | 1.4 | 1:2.5 to 1:3 | 1:0.98 | 1.2 |

| Comparative Example 4 | 1(Al$_2$O$_3$) | 7.8 | 7.5 | 1.5 | 1:3 to 1:3.5 | 1:1.02 | 1.85 |
|---|---|---|---|---|---|---|---|

<Experimental Example: Evaluation of discharge capacity, initial efficiency, and life (capacity retention rate) characteristics>

A negative electrode and a battery were prepared using the negative electrode active materials of Examples and Comparative Examples, respectively.

A mixture was prepared by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to prepare a negative electrode slurry. The negative electrode slurry was applied to a copper (Cu) metal thin film as a negative electrode current collector having a thickness of 20 μm, and dried. In this case, the temperature of the circulating air was 60°C. Then, the thin film was roll-pressed and dried at 130°C for 12 hours in a vacuum oven to prepare a negative electrode.

A lithium (Li) metal thin film obtained by cutting a lithium metal sheet into a circular shape of 1.7671 cm$^2$ was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF$_6$ to a concentration of 1M was injected to prepare a lithium coin half-cell.

The prepared batteries were charged and discharged to evaluate discharge capacity, initial efficiency, and capacity retention rate, and the evaluation results are shown in Table 2 below.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).

Charging conditions: CC (constant current)/CV (constant voltage) (5 mV/0.005 C current cut-off)

Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (first time discharge capacity/one time charge capacity) $\times$ 100

The capacity retention rate was derived by the following calculation.

Capacity retention rate (%) = (49 times discharge capacity/first time discharge capacity) $\times$ 100

<Experimental Example: Evaluation of processability (shear viscosity) characteristics>

As part of the evaluation of processability, the change in shear viscosity at shear rate (= 1 Hz) of the slurry prepared by mixing graphite, the negative electrode active material, carbon black, CMC, and PAA in a weight ratio of 77:20:1:1:1 was measured and shown in Table 2 below. Specifically, the amount of change (%) in shear viscosity was derived by the following calculation formula.

Amount of change (%) in shear viscosity = ((shear viscosity of slurry after 48h - shear viscosity of slurry immediately after mixing)/shear viscosity of slurry immediately after mixing) $\times$ 100

Time point of gas generation: 20 g of slurry was put into an aluminum pouch of 10$\times$15 cm, which was then vacuum-sealed. Thereafter, a change in volume was measured using Archimedes' principle, and a time point at which 4 mL or more of change in volume occurred was defined as a time point of gas generation.

The characteristics evaluated as described above are shown in Table 2 below.

[Table 2]

| Battery | Discharge capacity (mAh/g) | Initial efficiency (%) | Capacity retention rate (%) | Amount of change (%) in shear viscosity | Time point of gas generation (hr) |
|---|---|---|---|---|---|
| Example 1 | 1955 | 92 | 91 | 17 | 66 |
| Example 2 | 1810 | 90 | 87 | 20 | 48 |
| Example 3 | 1883 | 89 | 84 | 18 | 70 |
| Example 4 | 1912 | 90 | 89 | 17 | 66 |
| Example 5 | 1445 | 88 | 90 | 19 | 52 |
| Comparative Example 1 | 1924 | 90 | 88 | 32 | 18 |
| Comparative Example 2 | 1910 | 90 | 81 | 44 | 12 |
| Comparative Example 3 | 1878 | 89 | 83 | 26 | 24 |
| Comparative Example 4 | 1890 | 89 | 87 | 50 | 10 |

Examples 1 to 5 where a silicon carbon composite having an oxide layer and a carbon layer of appropriate thicknesses was used as a negative electrode active material showed that the battery performance such as discharge capacity, initial efficiency, and capacity retention rate was superior to Comparative Example 1 where only a fine oxide layer was formed by natural oxidation without going through an oxide layer forming process, Comparative Example 2 where a carbon layer was not formed, Comparative Example 3 where the oxide layer and the carbon layer were formed in a reversed order, and Comparative Example 4 where a coating layer of $Al_2O_3$ with a thickness of 1 nm was formed. Furthermore, in Examples 1 to 5, the amounts of change in shear viscosity were significantly small and the time point of gas generation could be significantly delayed by controlling gas generation during the process due to the presence of the oxide layer and carbon layer. That is, in the Examples, it was confirmed that not only the battery performance could be significantly improved, but also the processability could be significantly improved through prevention of gas generation.

**Claims**

1.   A negative electrode active material comprising:

   a core comprising a silicon carbon composite;
   an oxide layer provided on at least a portion of the core and comprising silicon oxide, a thickness of 50% or more of the oxide layer being greater than 5 nm; and
   a carbon layer provided on at least a portion of the oxide layer.

2.   The negative electrode active material of claim 1, wherein an element ratio of Si:C on a surface of the negative electrode active material is 1:1 to 1:4.

3.   The negative electrode active material of claim 1, wherein an element ratio of Si:C in an entire of the negative electrode active material is 0.9:1.1 to 1.1:0.9.

4. The negative electrode active material of claim 1, wherein the silicon oxide in the oxide layer is $SiO_x$ (x is 0.1 or greater and less than 2).

5. The negative electrode active material of claim 1, wherein the negative electrode active material comprises silicon crystal grains with a particle diameter of 8 $\mu$m or less.

6. The negative electrode active material of claim **1,** wherein a thickness of the oxide layer is 200 nm or less.

7. The negative electrode active material of claim **1,** wherein a thickness of 50% or more of the oxide layer is 10 nm or greater.

8. The negative electrode active material of claim **1,** wherein the silicon carbon composite comprises porous carbon-based particles and silicon particles located on surfaces or in internal pores of the porous carbon-based particles.

9. A negative electrode comprising:

   the negative electrode active material of any one of claims 1 to 8;
   a conductive material; and
   a binder.

10. A lithium secondary battery comprising:

    the negative electrode of claim **9;**
    a positive electrode; and
    a separator.

11. A battery module comprising the lithium secondary battery of claim 10.

12. A battery pack comprising the lithium secondary battery of claim 10.

13. A battery pack comprising the battery module of claim 11.

14. A method for manufacturing a negative electrode active material of any one of claims 1 to 8, the method comprising:

    forming a core comprising a silicon carbon composite;
    forming an oxide layer provided on at least a portion of the core and comprising silicon oxide; and
    forming a carbon layer on at least a portion of the oxide layer.

15. The method of claim 14, wherein the forming an oxide layer provided on at least a portion of the core and comprising silicon oxide comprises performing a heat treatment in an atmosphere including oxygen, and
    wherein the heat treatment is performed at 600°C to 700°C.

## INTERNATIONAL SEARCH REPORT

| International application No. |
| --- |
| **PCT/KR2024/010913** |

### A. CLASSIFICATION OF SUBJECT MATTER

**H01M 4/36**(2006.01)i; **H01M 4/48**(2010.01)i; **H01M 4/134**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01B 31/02(2006.01); C01B 32/05(2017.01); C01B 33/02(2006.01); H01M 10/052(2010.01); H01M 4/02(2006.01); H01M 4/13(2010.01); H01M 4/38(2006.01); H01M 4/48(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode, negative electrode), 실리콘(silicon), 카본(carbon), 실리콘 산화물 (silicon oxide), 코팅(coating), 리튬이온 전지(lithium ion battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2015-0101310 A (SAMSUNG ELECTRONICS CO., LTD.) 03 September 2015 (2015-09-03) <br> See paragraphs [0028]-[0087]. | 1-15 |
| A | KR 10-2022-0073074 A (SK ON CO., LTD. et al.) 03 June 2022 (2022-06-03) <br> See claims 1-14. | 1-15 |
| A | KR 10-2016-0061001 A (YEIL ELECTRONICS CO., LTD.) 31 May 2016 (2016-05-31) <br> See claims 1-6. | 1-15 |
| A | JP 2006-190642 A (IND TECHNOL RES INST) 20 July 2006 (2006-07-20) <br> See entire document. | 1-15 |
| A | KR 10-1751717 B1 (SOGANG UNIVERSITY RESEARCH & BUSINESS DEVELOPMENT FOUNDATION) 28 June 2017 (2017-06-28) <br> See entire document. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 November 2024** | **06 November 2024** |

| Name and mailing address of the ISA/KR | Authorized officer |
| --- | --- |
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/010913** |

| Patent document cited in search report | | | Publication date (day/month/year) | Patent family member(s) | | | Publication date (day/month/year) |
|---|---|---|---|---|---|---|---|
| KR | 10-2015-0101310 | A | 03 September 2015 | KR | 10-2192087 | B1 | 16 December 2020 |
| | | | | US | 2015-0243969 | A1 | 27 August 2015 |
| | | | | US | 9548490 | B2 | 17 January 2017 |
| KR | 10-2022-0073074 | A | 03 June 2022 | CN | 114551822 | A | 27 May 2022 |
| | | | | DE | 102021130755 | A1 | 02 June 2022 |
| | | | | US | 2022-0166013 | A1 | 26 May 2022 |
| KR | 10-2016-0061001 | A | 31 May 2016 | None | | | |
| JP | 2006-190642 | A | 20 July 2006 | TW | 200624605 | A | 16 July 2006 |
| | | | | TW | 263702 | B | 11 October 2006 |
| | | | | TW | I263702 | B | 11 October 2006 |
| | | | | US | 2006-0147797 | A1 | 06 July 2006 |
| KR | 10-1751717 | B1 | 28 June 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230098692

- KR 1020240098727